## Europäisches Patentamt

## European Patent Office

## Office européen des brevets

(19)

(11) Numéro de publication: **0 091 341
B1**

## FASCICULE DE BREVET EUROPEEN

(12)

(45) Date de publication du fascicule du brevet:
**10.12.86**

(21) Numéro de dépôt: **83400597.7**

(22) Date de dépôt: **23.03.83**

(51) Int. Cl.⁴: **D 21 H 5/00,** D 21 H 3/48,
D 06 M 15/37, C 08 L 61/02,
B 41 M 3/10

(54) **Matières cellulosiques rendues transparentes et leurs applications, leur procédé de fabrication et les compositions de traitement correspondantes.**

(30) Priorité: **25.03.82 FR 8205124**

(43) Date de publication de la demande:
**12.10.83 Bulletin 83/41**

(45) Mention de la délivrance du brevet:
**10.12.86 Bulletin 86/50**

(84) Etats contractants désignés:
**BE DE FR GB IT LU NL SE**

(56) Documents cités:
**FR - A - 1 564 395
US - A - 2 029 525
US - A - 3 048 100**

**Le dossier contient des informations techniques
présentées postérieurement au dépôt de la demande et
ne figurant pas dans le présent fascicule.**

(73) Titulaire: **ARJOMARI-PRIOUX Société anonyme dite, 3,
rue du Pont de Lodi, F-75261 Paris Cedex 06 (FR)**

(72) Inventeur: **Vernois, Michel, Les Damiers 12 Place des
Dominos, F-92400 Courbevoie (FR)**
Inventeur: **Duboeuf, Jean Paul, La Favetière,
F-38850 Charavines (FR)**

(74) Mandataire: **Richebourg, Michel François et al, Cabinet
Beau de Loménie 55, rue d'Amsterdam, F-75008 Paris
(FR)**

ACTORUM AG

## Description

La présente invention concerne un procédé d'obtention d'un nouveau papier rendu en tout ou partie transparent par imprégnation dans un bain spécial (plus brièvement ci-après «transparentisé», et «transparentisation»), pour des applications telles que le dessin, la génération de graphiques sur tables traçantes, les montages graphiques, la reprographie, la fabrication de fenêtres transparentes pour enveloppes ainsi que le papier pour abat-jour de lampes, et même un papier filigrané.

Le procédé utilisé dans le papier calque qui consiste à apporter la transparence par raffinage poussé de la pâte à un degré Shopper Riegler supérieur à 90–95° SR est connu depuis fort longtemps. Cette technique coûteuse en énergie conduit par ailleurs à un papier dont la stabilité dimensionnelle aux variations hygrométriques est mauvaise, ces variations étant très différentes suivant le sens marche de la machine à papier et selon le sens travers. Il en résulte des modifications préjudiciables pour les plans et graphiques élaborés sur ce type de support.

Des papiers dont la «transparentisation» est obtenue par incorporation d'une substance chimique ou d'un mélange de substances sont également connus.

Afin de conférer les propriétés optiques requises, les constituants du mélange doivent avoir un indice de réfraction proche de celui de la cellulose soit 1,5. Les vides interfibres du support sont ainsi comblés par le bain d'imprégnation et il en résulte une transparence uniforme.

Les caractéristiques recherchées sont une dureté de surface, une excellente réceptivité aux encres, une bonne résistance à la manipulation, une excellente résistance mécanique, une faible opacité, une parfaite transparence au rayonnement UV ainsi qu'une permanence dans le temps de l'ensemble de ces propriétés.

La littérature fait état de nombreux brevets pour rendre transparente une substance cellulosique mais la plupart des solutions préconisées soit ne permettent pas d'obtenir simultanément l'ensemble des caractéristiques recherchées, soit sont difficilement applicables sur le plan industriel car elles nécessitent un repos humide du papier pour une période de longue durée afin que l'argent de «transparentisation» pénètre à cœur du papier.

C'est ainsi qu'ont été proposées les solutions suivantes:

a) L'adjonction, à un papier relativement opaque, de corps gras (brevet US-A-1 731 679), d'huiles siccatives (DE-A-1 546 460), de plastifiants, sous forme d'imprégnation.

Si la transparence obtenue est généralement bonne, toutefois l'agent de «transparentisation» a tendance à migrer à la surface du papier et il en résulte outre des problèmes de maculages, des difficultés d'écriture, un toucher gras ainsi qu'un jaunissement dans le temps.

b) L'imprégnation par des polymères naturels ou synthétiques et leur réticulation.

Ainsi ont été suggérés, à titre d'exemple, les procédés suivants:

— l'imprégnation par des polymères terpéniques (DE-A-1 546 461), par des polyuréthanes (US-A-1 036 572 et 4 137 046) par une résine méthacrylique (SU-534 540), par des systèmes bi- ou multicomposants (résine époxy + polyaminoamide (DE-A-1 282 437)), par une résine mélamine-formaldéhyde.

Ces composés sont souvent appliqués en combinaison avec un plastifiant du type phtalate.

Ils nécessitent, dans la très grande majorité des cas, l'emploi d'un catalyseur afin de supprimer le caractère collant de ces résines en l'absence de réaction de réticulation (les systèmes catalytiques se sont révélés être difficiles à contrôler. On obtient en général un produit bien réticulé en surface mais mal réticulé à cœur du papier. On obtient ainsi une surface brillante – alors que l'on recherche la matité – et sur laquelle l'encre perle).

Ces résines polymères étant des substances de viscosité relativement élevée, elles ne peuvent pénétrer rapidement dans les pores du papier anif de conférer une parfaite homogénéité en transparence. Il est donc nécessaire industriellement, après une première imprégnation sur machine, de bobiner le papier à l'état humide afin que la résine puisse migrer à cœur du support.

Cette opération peut durer plusieurs jours voire plusieurs semaines avant de procéder à la réticulation finale par la chaleur, le rayonnement UV ou le bombardement par faisceau d'électrons (un tel repos humide sur bobine peut durer une quinzaine de jours, il faut ensuite effectuer un deuxième passage sur machine, et malgré tout le papier présente des défauts, comme notamment des taches brillantes. Ceci représente des inconvénients graves, auxquels il faut ajouter l'étape de réticulation finale).

c) l'incorporation dans le support de fibres synthétiques sous forme de pâte, la transparence étant obtenue par calandrage à chaud ou embossage sur un cylindre qui déterminera l'état de surface recherché. Ce procédé nécessite un matériel coûteux et peu répandu dans le secteur papetier. De plus, l'aptitude graphique des supports obtenus après calandrage à chaud n'est généralement pas très bonne, l'encre ayant tendance à perler.

On connaît aussi par le document US-A-2 029 525 l'imprégnation d'un support cellulosique au moyen d'une solution aqueuse à base d'aminoplastes, de cétone-aldéhydes et de plastifiants. Toutefois, selon ce document qui vise la fabrication de stratifiés par empilage et mise sous pression de feuilles imprégnées, la transparence ou plutôt translucidité conférée au produit final n'est possible qu'en raison de la pression impliquée par le procédé et de la réduction subséquente des vides interfibres. De plus, c'est également le pressage à chaud qui permet la réticulation finale des résines: sans cette étape, les feuilles imprégnées conservent un toucher poisseux qui les rend impropres aux applications graphiques visées dans la présente invention.

Le but de l'invention est de proposer un procédé permettant d'obtenir un papier destiné, non aux stratifiés, mais à un usage graphique analogue à celui du papier calque tradtionnel, et qui par ailleurs ne présente pas les inconvénients précités.

L'invention atteint son but en imprégnant un support cellulosique au moyen d'une composition (ou sauce) comprenant la combinaison d'une résine de type cétone-aldéhyde, une résine aminoplaste ou alkyde modifiée, un solvant organique non aqueux comprenant au moins une coupe pétrolière de point d'ébullition supérieur à 150 °C et d'indice de réfraction compris entre 1,4 et 1,6, un plastifiant, et éventuellement des charges d'indice de réfraction voisin de 1,5; au moins une partie du solvant participant à la structure finale obtenue après la réticulation thermique.

La résine aminoplaste est choisie par exemple parmi le groupe des mélamines et de préférence des méthoxyméthylmélamines.

La résine de condensation cétone-aldéhyde est plus particulièrement choisie parmi les résines cétones-aldéhyde modifiées.

Le plastifiant fait partie par exemple de la famille des phtalates, adipates, sébaçates, tallol, huiles telles que l'huile de ricin, de lin, de soja, de palme, d'arachide, d'acides gras, des huiles époxydées, des plastifiants à polymères.

Le solvant sera choisi préférentiellement parmi les coupes pétrolières à caractère paraffinique ou isoparaffinique, désaromatisée ou aromatique.

Parmi les solvants, il semble plus judicieux d'utiliser pour des raisons d'hygiène et de sécurité des composés paraffiniques ou isoparaffiniques comportant plus de 7 atomes de carbone.

La résine cétone-aldéhyde modifiée confère au support une forte «transparentisation».

En l'absence de catalyseur la résine seule conserve un toucher poisseux. Afin de conférer au produit fini une dureté de surface convenable et une certaine rigidité, il est nécessaire de réticuler la résine en formant un réseau tridimensionnel.

A cette fin, on peut mélanger une résine mélamine à la résine cétone-aldéhyde. Le choix de cette résine aminoplaste s'est porté sur une hexaméthoxyméthylmélamine sous sa forme monomère pour des raisons de réactivité et de faible viscosité. Cette faible viscosité va permettre à l'ensemble de la sauce d'imprégnation de migrer rapidement à cœur du support cellulosique.

Même si l'on apporte la sauce de «transparentisation» par une seule des faces du support, par un dispositif approprié d'enduction, la migration à cœur est très rapide (quelques secondes). Bien entendu, cette vitesse de migration est fonction de la nature du support cellulosique, mais la sauce de «transparentisation» selon l'invention est si mobile (viscosité comprise entre 30 et 70 · 10⁻³Pa · s (cPo) environ) qu'en fait cette vitesse varie très peu selon la nature du support. On notera que l'apport par une seule face favorise le dégazage de la feuille, avantage appréciable.

A titre indicatif, pour un support 100% chiffons, le temps de migration à cœur est de 1 à 2 sec., et la sauce atteint l'autre face en 2–3 sec; environ 5 sec. paraît être un temps maximum.

On peut envisager, bien que l'apport par une seule face soit tout à fait satisfaisant, d'apporter la sauce d'imprégnation simultanément par les deux faces, soit par enduction, soit par passage plein bain.

Influence des charges:

Les charges n'apparaissent pas devoir gêner la «transparentisation» dans la mesure où elles présentent un indice de réfraction de l'ordre de grandeur de celui de la cellulose, et de la résine, soit environ 1,5.

Ceci inclut donc les charges classiques utilisées en papeterie telles que: le kaolin, le talc, la craie... mais exclut les charges du type $TiO_2$ par exemple dont l'indice de réfraction d'environ 2,5 est très supérieur à celui de la cellulose et de la résine.

Le taux de charges n'est limité que par le fait de la baisse des caractéristiques mécaniques du support utilisé.

Selon l'invention, les fonctions des deux résines sont bien définies.

Ainsi, la résine cétone-aldéhyde a pour fonction (pratiquement à 100%) la «transparentisation» du support. Ceci a été établi par un essai selon lequel on a conservé la résine cétone-aldéhyde mais changé le système de réticulation (on a utilisé un système connu comportant un catalyseur, au lieu du système mélamine/chaleur utilisé selon l'invention): on a obtenu, très sensiblement, la même «transparentisation», ce qui implique que la résine de type mélamine n'a pratiquement pas de fonction de «transparentisation» dans le cas présent.

Le brevet américain US-A-3 813 261 mentionne l'utilisation de méthoxyméthylmélamine comme agent de «transparentisation» mais en combinaison avec des éthers polvols et un catalyseur acide. Il s'agit donc d'un procédé différent puisque selon la présente invention, comme il vient d'être dit, la mélamine joue essentiellement le rôle d'agent de couplage et la réaction ne nécessite aucun catalyseur, la réticulation intervenant exclusivement par réaction thermique.

La réaction de pontage avec des composés thermodurcissables conduit inévitablement à la formation d'un réseau tridimensionnel qui confère au produit final un certain caractère cassant. Il va de soi que si la dureté de surface est un paramètre recherché pour un support «transparentisé» à usage graphique, toutefois ces papiers sont destinés à être manipulés sans précautions particulières et un caractère cassant serait très préjudiciable à une utilisation intensive. Il est donc nécessaire de prévoir un assouplissement par adjonction d'un plastifiant tel que, à titre d'exemple non limitatif, un phtalate. Le choix du plastifiant se portera sur un composé qui n'aura pas tendance à migrer en surface dans le temps ou sous l'action de la chaleur. On utilisera de préférence le dibutylphtalate.

L'utilisation du milieu solvant a été préférée au système aqueux car, dans ce dernier cas, lors de l'imprégnation, les fibres cellulosiques ont tendance à augmenter rapidement de volume par hydratation. La résine de «transparentisation» n'occupe donc qu'une partie du volume interfibre et, lors du séchage, l'évaporation de l'eau conduit à une perte sensible de «transparentisation», les fibres n'étant plus parfaitement enrobées par la résine. Afin d'obtenir un produit de bonne transparence optique et de fondu homogène, il faut utiliser un solvant comprenant au moins une coupe pétrolière dont l'indice de réfraction est compris entre 1,4 et 1,6 et dont le point d'ébullition est supérieur à 150°C pour rester inclus dans le papier après réaction de réticulation.

On utilisera de préférence des coupes pétrolières du type ISOPAR G, H, L, M (produits isoparaffiniques) qui ne contiennent par ailleurs aucun solvant aromatique.

Cependant, on utilisera en règle générale un sytème solvant comprenant, outre les coupes pétrolières précitées, un ou plusieurs alcools tels que les alcools éthylique, isopropylique, butylique, ou isobutylique, ces derniers conférant la caractéristique de mouillabilité, et abaissant encore la viscosité, tout en servant par ailleurs de solvant pour la résine cétone-aldéhyde.

On notera que, dans les procédés antérieurs, le solvant utilisé est à usage temporaire, c'est-à-dire qu'il est destiné à être éliminé.

Au contraire, selon l'invention, le solvant reste dans le produit final et participe à la structure définitive de celui-ci, au moins en partie.

Entre autres avantages, on évite ainsi la récupération (coûteuse) du solvant.

La méthode de «transparentisation» qui fait l'objet de l'invention s'applique à une large gamme de supports cellulosiques tels que des papiers à base de chiffons, linters, pâtes chimiques, pâtes mécaniques, composés non tissés, sous forme de feuilles ou bandes continues ou non.

En fait, la nouvelle méthode s'applique à tout support cellulosique depuis le pur chiffon jusqu'au 100% bois (pâte mécanique) en passant par toutes les combinaisons intermédiaires et notamment la cellulose chimique. Ainsi, on peut même envisager la «transparentisation» d'un tissu.

Le choix du support dépendra par exemple de son coût, de la nécessité de respecter certaines normes nationales, etc.

Le papier de base utilisé pourra être d'un poids au mètre carré compris entre 20 et 350 grammes. Il pourra s'agir d'un support collé en masse ou non collé, avec ou sans collage de surface, dans la mesure où ces traitements ne modifient pas la vitesse de pénétration dans le support de la sauce de «transparentisation» en milieu solvant ni la mouillabilité des fibres et la prise totale en bain d'imprégnation.

Préférentiellement pour des raisons de résistance mécanique et de permanence dans le temps des caractéristiques physiques on préfèrera un support à base de linters (pur chiffon), la pâte étant préalablement raffinée pour obtention d'un degré Shopper Riegler compris entre 40 et 65° SR.

La sauce préférée de «transparentisation» est constituée comme suit, les pourcentages étant exprimés en poids:

Résine de condensation (cétone-aldéhyde)　　10 à 20%
Résine participant à la réticulation (hexaméthoxyméthylmélamine ou résine alkyde modifiée)　　15 à 30%
Alcool isopropylique, et/ou butylique et/ou isobutylique　　7 à 15%
Plastifiant　　25 à 35%
Solvant du type coupe pétrolière à point d'ébullition > 150°C et d'indice de réfraction compris entre 1,4 et 1,6　　10 à 20%

L'exemple suivant illustre l'invention sans toutefois en limiter la portée.

EXEMPLE (CP₂702):
On a préparé la formulation de «transparentisation» détaillée ci-dessous, les pourcentages des différents constituants étant exprimés en poids.

Résine de condensation cétone-aldéhyde modifiée[*]
(indice d'acide ≃ 0,2 mg KOH/g (DIN 53402) indice d'OH: 300–320 mg KOH/g)　　12%
Résine hexaméthoxyméthylmélamine (produite par ROSSOW sous la dénomination «Dynomin MM 103»)　　23%
Alcool éthylique　　4%
Alcool butylique ou isopropylique　　17%
Dibutylphtalate (commercialisé par BASF sous le nom de «Palatinol C»)　　28%
coupe pétrolière de produits isoparaffiniques «Isopar» G (ESSO Standard)　　16%

Le support de base d'un grammage de 49 g/m2 a été obtenu à partir d'une pâte 100% linters raffinée pour obtention d'un degré Shopper-Riegler compris entre 50 et 60. Les caractéristiques physiques de ce support sont rassemblées dans le Tableau I ci-après.

La sauce de «transparentisation» dont la formule est détaillée ci-dessus a été appliquée sur une seule face du support par un procédé d'imprégnation par un rouleau applicateur.

La solution pénètre uniformément et en un temps inférieur à 5 secondes au sein du papier et l'excès éventuel de sauce est enlevé par passage de la feuille dans une presse dont on peut faire varier la pression entre les rouleaux. Le papier «transparentisé» est ensuite séché par passage de la feuille dans un séchoir à air chaud à feuille aéroportée dont la première zone de chauffage est portée à une températre de 110–120°C et la seconde zone à une température comprise entre 135 et 150°C.

Dans la première zone, il se produit une réticulation partielle telle qu'elle n'empêche pas la migration (on sait qu'il faut qu'il reste en surface le moins possible de sauce de «transparentisation»).

---

[*] condensation acétophénone + formol, le tout étant hydrogéné.

Dans la seconde zone, il se produit la réticulation totale.

Ceci représente le meilleur mode opératoire, mais on peut envisager un séchoir à une seule zone, ou d'autres variantes équivalentes.

La quantité de sauce de «transparentisation» absorbée par le papier a été de 7 g/m².

On obtient ainsi au sortir du séchoir un papier de «transparentisation» dont l'opacité est de 40,5 alors que le papier de base présente une opacité de 65. De plus, ce papier «transparentisé» est très stable dimensionnellement vis-à-vis des variations d'humidité relative, est transparent au rayonnement ultra violet et convient donc à la duplication par le procédé diazoïque, possède une excellente aptitude graphique tant en ce qui concerne la qualité d'écriture et le dessin que de gommage ou grattage. Il peut par ailleurs être utilisé dans les appareils de photocopie du type Xérographique, qu'il s'agisse de dispositifs à révélation par Toner poudre ou par Toner liquide.

Il possède par ailleurs un meilleur «fondu» (aspect moins «granité») que les papiers de l'état de la technique.

Des essais comparatifs ont été effectués entre le papier «transparentisé» obtenu selon l'exemple ci-dessus, un papier calque et deux papiers «transparentisés» connus.

Les propriétés des quatre produits sont rassemblées dans le Tableau II ci-après.

### Tableau I

| | Papier de base Avant «transparentisation» | Après «transparentisation» | Papier calque pour comparaison |
|---|---|---|---|
| Grammage (g/m²) | 49 | 56 | 60 |
| Epaisseur (μm) | 66 | 54 | 50 |
| Densité | 0,74 | 1,04 | 1,20 |
| Résistance à la traction (kg) par 15 mm de largeur | | | |
| sens marche | 6 | 5,9 | 9 |
| sens travers | 3,5 | 3,4 | 4,8 |
| Déchirure (mN) | | | |
| sens marche | 352 | 360 | 180 |
| sens travers | 424 | 390 | 270 |
| I 100 (indice de déchirure) | 765 | 670 | 375 |
| Opacité (%) | 65 | 40,5 | 24–26 |
| Rigidité Taber | | | |
| sens marche | 0,55 | 0,64 | |
| sens travers | 0,175 | 0,13 | |
| Stabilité dimensionnelle (% de variation entre 15 et 98% d'humidité relative) | | | |
| sens marche | | 0,25 | 0,3 |
| sens travers | | 1,20 | 3 |

### Tableau II

| | Calque | P 2 000 Papiers «transparentisés» de type américain | P 4 000 | CP$_2$ 702 (exemple selon l'invention) |
|---|---|---|---|---|
| Grammage (g/m²) | 60 | 64 | 68 | 56 |
| Epaisseur (μm) | 50 | 71 | 83 | 54 |
| Main | 0,83 | 1,1 | 1,22 | 0,96 |
| Traction (kg/15 mm) | | | | |
| sens marche | 9 | 5,97 | 6,26 | 5,91 |
| sens travers | 4,8 | 3,61 | 3,69 | 3,41 |
| Déchirure (mN) | | | | |
| sens marche | 180 | 420 | 540 | 360 |
| sens travers | 270 | 440 | 580 | 390 |
| Indice de déchirure (I 100) | 375 | 670 | 820 | 670 |
| Opacité (xx) (%) | 24–26 | 50,5 | 47 | 40,5 |
| Stabilité dimensionnelle (x) (%) | | | | |
| sens marche | 0,3 | 0,3 | 0,25 | 0,25 |
| sens travers | 3 | 0,80 | 0,80 | 1,2 |

I 100 : déchirure (mN) rapportée à um papier de grammage 100
(x) : variation entre 15% et 98% d'humidité relative
(xx) : comme dans la totalité de la présente demande, exprimée en % selon la norme NF Q–03–006 («mesure de l'opacité de contraste des pâtes et papiers»).
Main : rapport épaisseur (μm)/poids au m² (g).

Les caractéristiques mécaniques dépendent évidemment du support utilisé. Le papier «transparentisé» obtenu se démarque notamment dans le cas présent du calque par sa résistance à la déchirure élevée et par sa meilleure stabilité dimensionnelle sens travers en particulier.

Le dessin annexé, dans lequel:

– la Figure 1 représente la variation dimensionnelle du papier «transparentisé» obtenu selon l'exemple ci-dessus, en fonction du % d'humidité relative, dans le sens marche.

– La Figure 2 représente la même variation du même papier, mais dans le sens travers, permet d'apprécier les caractéristiques de variation dimensionnelle du papier «transparentisé» selon l'invention.

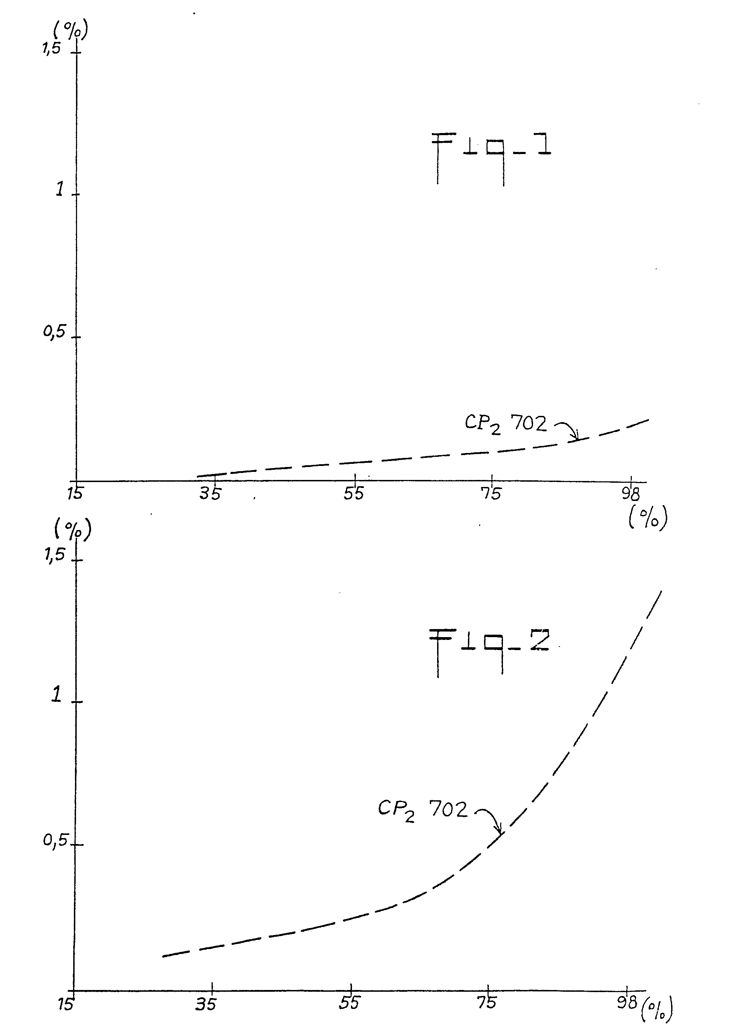

Aptitude à obtenir des filigranes par impression hélio ou offset:

Aucun résultat n'a été obtenu par le procédé offset.

Avec une petite machine hélio de laboratoire comprenant des plages de gravures différentes et un macaron, on a obtenu l'image «transparentisée» des différents dessins du cylindre hélio, la sauce de «transparentisation» CP$_2$ 702 utilisée telle quelle faisant office d'encre. Elle présente donc une aptitude à donner des filigranes par «transparentisation». En particulier on n'a pas noté de diffusion dans le sens travers, les lettres du dessin étant donc bien lisibles en filigrane.

**Revendications**

1. Papier «transparentisé» à usage graphique constitué par un support cellulosique imprégné par une composition chimique, caractérisé en ce qu'il contient en sa masse et comblant les espaces compris entre les fibres:
   – une résine de type cétone-aldéhyde,
   – une résine, aminoplaste ou alkyde modifiée,
   – un solvant organique non aqueux comprenant au moins une coupe pétrolière de point d'ébulltion supérieur à 150°C et d'indice de réfraction compris entre 1,4 et 1,6,
   – un plastifiant,
   – et éventuellement des charges d'indice de réfraction voisin de 1,5; au moins une partie du solvant participant à la structure finale obtenue après la réticulation thermique.

2. Papier selon la revendication 1, caractérisé en ce que le support est choisi parmi tous les supports cellulosiques depuis le pur chiffon jusqu'au 100% bois, y compris les tissus et la cellulose chimique.

3. Papier selon la revendication 1 ou 2, caractérisé en ce que le grammage du support est compris entre 20 et 350 grammes/m2.

4. Papier selon l'une quelconque des revendications 1 à 3, caractérisé en ce que la composition de «transparentisation» contient (en poids):
| | |
|---|---|
| résine cétone-aldéhyde | 10–20% |
| résine aminoplaste ou alkyde modifiée | 15–30% |

système solvant;
coupe pétrolière de point d'ébullition
> 150°C et d'indice de réfraction compris entre 1,4 et 1,6     10–20%
et éventuellement alcools éthylique,
| | |
|---|---|
| butylique, isobutylique ou isopropylique | 7–15% |
| plastifiant | 25–35% |

5. Papier selon l'une quelconque des revendications 1 à 4, caractérisé en ce que la composition de «transparentisation» contient (en poids)
| | |
|---|---|
| résine de condensation (cétone-aldéhyde modifiée) | 10 à 20% |
| résine participant à la réticulation (hexaméthoxyméthyl mélamine ou résine alkyde modifiée) | 15 à 30% |
| alcool isopropylique, et/ou butylique et/ou isobutylique | 7 à 15% |
| plastifiant | 25 à 35% |

solvant du type coupe pétrolière à point d'ébullition > 150°C et d'indice de réfraction compris entre 1,4 et 1,6     10 à 20%

6. Papier selon l'une quelconque des revendications 1 à 5, caractérisé en ce que la composition de «transparentisation» contient, (en poids):
résine de condensation cétone-aldéhyde modifiée (indice d'acide ≃ 0,2 mg KOH/g (DIN 53402) indice d'OH: 300–320 mg KOH/g)
| | |
|---|---|
| | 12% |
| résine hexaméthoxyméthylmélamine | 23% |
| alcool éthylique | 4% |
| alcool butylique ou isopropylique | 17% |
| Dibutylphtalate | 28% |
| coupe pétrolière de produits isoparaffiniques | 16% |

7. Composition pour la «transparentisation», par imprégnation, d'un support cellulosique choisi depuis le pur chiffon jusqu'au 100% bois, y compris les tissus et la cellulose chimique, de grammage 20–350 g/m2, caractérisée en ce qu'elle consiste en:

   – une résine de type cétone-aldéhyde,
   – une résine, aminoplaste ou alkyde modifiée,
   – un solvant organique non aqueux comprenant au moins une coupe pétrolière de point d'ébullition supérieur à 150°C et d'indice de réfraction compris entre 1,4 et 1,6,
   – et un plastifiant.

8. Composition selon la revendication 7, caractérisée en ce qu'elle consiste en (en poids):
| | |
|---|---|
| résine cétone-aldéhyde | 10–20% |
| résine aminoplaste ou alkyde modifiée | 15–30% |

système solvant:
coupe pétrolière de point d'ébullition
> 150°C et d'indice de réfraction
| | |
|---|---|
| compris entre 1,4 et 1,6 | 10–20% |

et éventuellement alcools éthylique, butylique,
| | |
|---|---|
| isobutylique ou isopropylique | 7–15% |
| plastifiant | 25–35% |

9. Composition selon la revendication 7 ou 8 caractérisée en ce qu'elle consiste en (en poids)
| | |
|---|---|
| résine de condensation (cétone-aldéhyde modifiée) | 10 à 20% |
| résine participant à la réticulation (hexaméthoxyméthyl mélamine ou résine alkyde modifiée) | 15 à 30% |
| alcool isopropylique, et/ou butylique et/ou isobutylique | 7 à 15% |

plastifiant                              25 à 35%
solvant du type coupe pétrolière à point
d'ébullition > 150 °C et d'indice
de réfraction compris entre 1,4 et 1,6    10 à 20%

10. Composition selon l'une quelconque des revendications 7 à 9, caractérisée en ce qu'elle consiste en (en poids):
résine de condensation cétone-aldéhyde
modifiée (indice d'acide ≃ 0,2 mg KOH/g
(DIN 53402) indice d'OH: 300–320 mg KOH/g)
                                         12%
résine hexaméthoxyméthylmélamine         23%
alcool éthylique                          4%
alcoolt butylique ou isopropylique       17%
dibutylphtalate                          28%
coupe pétrolière de produits
isoparaffiniques                         16%

11. Procédé de «transparentisation», par imprégnation, d'un support cellulosique choisi depuis le pur chiffon jusqu'au 100% bois, y compris les tissus et la cellulose chimique, de grammage 20–350 g/m2 à l'aide d'une composition chimique d'imprégnation, caractérisé en ce qu'on imprègne ledit support avec cette composition, en quantité suffisante pour combler les espaces compris entre les fibres du support, cette composition comprenant:
    – une résine de type cétone-aldéhyde,
    – une résine, aminoplaste ou alkyde modifiée,
    – un solvant organique non aqueux comprenant au moins une coupe pétrolière de point d'ébullition supérieur à 150 °C et d'indice de réfraction compris entre 1,4 et 1,6,
    – et un plastifiant,
puis en ce qu'on sèche le support imprégné sans pression, directement sur la machine moyennant quoi on obtient une feuille finie transparentisée pour un usage graphique analogue à celui d'un papier calque.

12. Procédé selon la revendication 11, caractérisé en ce que l'imprégnation a lieu par une face seulement du support cellulosique.

13. Procédé selon la revendication 12, caractérisé en ce que l'on utilise un rouleau applicateur pour réaliser l'imprégnation.

14. Procédé selon la revendication 11, caractérisé en ce que l'imprégnation a lieu simultanément par les deux faces du support cellulosique.

15. Procédé selon la revendication 14, caractérisé en ce que l'imprégnation est réalisée par enduction simultanée des deux faces, ou par passage plein bain.

16. Procédé selon l'une quelconque des revendications 11 à 15, caractérisé en ce que l'on effectue le séchage en deux stades, dans un séchoir à air chaud, la première zone de chauffage étant à 110–120 °C et la seconde zone de chauffage étant à 135–150 °C.

17. Procédé selon l'une quelconque des revendications 11 à 15, caractérisé en ce que l'on effectue le séchage en un seul stade.

18. Utilisation des compositions selon l'une quelconque des revendications 7 à 10, caractérisée en ce qu'on utilise la composition chimique d'imprégnation comme encre dans une machine d'héliogravure, permettant ainsi une transparentisation localisée et l'obtention de filigranes par voie chimique.

## Claims

1. Transparentized paper for graphic use constituted by a cellulosic support impregnated with a chemical composition, characterized in that it contains in its mass and filling the spaces between fibres:
    – a resin of the ketone-aldehyde type,
    – an aminoplast or modified alkyde resin,
    – a non aqueous organic solvent comprising at least one petroleum cut with a boiling point higher than 150 °C and a refractive index of between 1.4 and 1.6,
    – a plasticizer,
    – and possibly fillers with a refractive index close to 1.5;
at least part or the solvent system participating in the final structure obtained after heat cross-linking.

2. Paper according to claim 1, characterized in that the support is selected from all cellulosic supports from pure rags up to 100% wood, including fabrics and chemical cellulose.

3. Paper according to claim 1 or 2, characterized in that the grammage of the support is between 20 and 350 g/m².

4. Paper according to any one of claims 1 to 3, characterized in that the transparentization composition contains (by weight):
ketone-aldehyde resin                    10–20%
aminoplast or modified alkyde resin      15–30%
solvent system:
petroleum cut with a boiling point
> 150 °C and a refractive index of
between 1.4 and 1.6                      10–20%
and possibly ethyl, butyl, isobutyl or
isopropyl alcohols                        7–15%
plasticizer                              25–35%

5. Paper according to any one of claims 1 to 4, characterized in that the transparentization composition contains (by weight):
condensation resin (modified
ketone-aldehyde)                       10 to 20%
resin participating in cross-linking
(hexamethoxymethylmelamine or modified
alkyde resin)                          15 to 30%
Isopropyl, and/or butyl and/or
isobutyl alcohol                        7 to 15%
plasticizer                            25 to 35%
solvent of the petroleum cut type
with boiling point > 150 °C and
refractive index of between
1.4 and 1.6                            10 to 20%

6. Paper according to any one of claims 1 to 5, characterized in that transparentization composition contains (by weight):
modified ketone-aldehyde condensation
resin (acide index ≃ 0.2 mg KOH/g
(DIN 53402) OH index: 300–320 mg KOH/g)  12%
hexamethoxymethylmelamine resin          23%
ethyl alcohol                             4%

butyl or isopropyl alcohol 17%
Dibutylphthalate 28%
petroleum cut of isoparaffin products 16%

7. Composition for transparentization, by impregnation, of a cellulosic support selected from pure rags up to 100% wood, including fabrics and chemical cellulose, with a grammage of 20–350 g/m², characterized in that it consists of:

– a resin of the ketone-aldehyde type,
– an aminoplast or modified alkyde resin,
– a non aqueous organic solvent comprising at least one petroleum cut with a boiling point higher than 150°C and a refractive index of between 1.4 and 1.6,
– a plasticizer.

8. Composition according to claim 7, characterized in that it consists (by weight) in:
ketone-aldehyde resin 10–20%
aminoplast or modified alkyde resin 15–30%
solvent system:
petroleum cut with a boiling point
> 150°C and a refractive index of
between 1.4 and 1.6 10–20%
and possibly ethyl, butyl, isobutyl
or isopropyl alcohols 7–15%
plasticizer 25–35%

9. Composition according to claim 7 or 8, characterized in that it consists (by weight) in:
condensation resin
(modified ketone-aldehyde) 10 to 20%
resin participating in cross-linking
(hexamethoxymethylmelamine or modified
alkyde resin) 15 to 30%
isopropyl, and/or butyl and/or
isobutyl alcohols 7 to 15%
plasticizer 25 to 35%
solvent of the petroleum cut type
with boiling point > 150°C
and refractive index of between
1.4 and 1.6 10 to 20%

10. Composition according to any one of claims 7 to 9, characterized in that it consists (by weight) in:
modified ketone-aldehyde condensation
resin (acid index $\doteq$ 0.2 mg KOH/g
(DIN 53402) OH index: 300–320 mg KOH/g) 12%
hexamethoxymethylmelamine resin 23%
ethyl alcohol 4%
butyl or isopropyl alcohol 17%
dibutylphthalate 28%
petroleum cut of isoparaffin
products 16%

11. Process of transparentization, by impregnation, of a cellulosic support selected from pure rags up to 100% wood, including fabrics and chemical cellulose, with a grammage of 20–350 g/m², with a chemical impregnation composition, characterized in that it comprises the steps of impregnating said support in a sufficient quantity to fill the spaces between fibres, said composition comprising:

– a resin of the ketone-aldehyde type
– an aminoplast or a modified alkyde resin,
– a non aqueous organic solvent comprising at least one petroleum cut with a boiling point higher than 150°C and a refractive index of between 1.4 and 1.6,
– a plasticizer,
then in drying the impregnated support without pressure directly on the machine, as a result of which a finished transparentized sheet is obtained for a graphic use similar to that of a tracing paper.

12. Process according to claim 11, characterized in that impregnation takes place on one face only of the cellulosic support.

13. Process according to claim 12, characterized in that an applicator roller is used for effecting impregnation.

14. Process according to claim 11, characterized in that impregnation takes place simultaneously on the two faces of the cellulosic support.

15. Process according to claim 14, characterized in that impregnation is effected by simultaneous coating of the two faces, or by passage in a full bath.

16. Process according to any one of claims 11 to 15, characterized in that drying is effected in two steps, in a hot air dryer, the first zone of heating being at 110–120°C and the second zone of heating being at 135–150°C.

17. Process according to any one of claims 11 to 15, characterized in that drying is effected in one step.

18. Use of the compositions according to any one of claims 7 to 10, characterized in that the impregnation chemical composition is used as ink in a photogravure machine, this permitting a localized transparentization and to obtain watermarks by the chemical route.

**Patentansprüche**

1. Transparent gemachtes Papier für graphische Zwecke auf der Basis eines mit einer chemischen Zusammensetzung imprägnierten Cellulaseträgers, dadurch gekennzeichnet, dass die Masse und die Zwischenräume zwischen den Fasern enthalten:
– ein Keton-Aldehydharz,
– ein Aminoplast- oder modifiziertes Alkydharz,
– ein nichtwässriges organisches Lösungsmittel mit einem Gehalt von mindestens einem Erdölschnitt mit einem Siedepunkt über 150°C und einem Brechungsindex von 1,4 bis 1,6,
– einen Weichmacher,
– gegebenenfalls Füllstoffe mit einem Brechungsindex um 1,5,
und zumindest ein Teil des Lösungsmittels an der nach der thermischen Vernetzung erhaltenen Endstruktur beteiligt ist.

2. Papier nach Anspruch 1, dadurch gekennzeichnet, dass der Träger unter Celluloseträgern von reinen Lumpen bis 100% Holz, einschliesslich Stoffe und chemischer Cellulose, ausgewählt wird.

3. Papier nach Anspruch 1 oder 2, dadurch gekennzeichnet, dass das Gewicht des Trägers von 20 bis 350 g/m² beträgt.

4. Papier nach einem der Ansprüche 1 bis 3, dadurch gekennzeichnet, dass die transparentmachende Zusammensetzung enthält (in Gewichtsprozent):

Keton-Aldehydharz 10–20%
Aminoplast- oder modifiziertes
Alkydharz 15–30%
Lösungsmittelsystem
Erdölschnitt mit einem Siedepunkt
über 150°C und einem Brechungsindex
von 1,4 bis 1,6 10–20%
gegebenenfalls Ethyl-, Butyl-,
Isobutyl- oder Isopropylalkohole 7–15%
Weichmacher 25–35%

5. Papier nach einem der Ansprüche 1 bis 4, dadurch gekennzeichnet, dass die transparentmachende Zusammensetzung enthält (in Gewichtsprozent):

Kondensationsharz (modifiziertes
Ketonaldehydharz 10–20%
an der Vernetzung beteiligtes
Kunstharz (Hexamethoxymethylmelamin
oder modifiziertes Alkydharz) 15–30%
Isopropyl- und/oder Butyl- und/oder
Isobutylalkohol 7–15%
Weichmacher 25–35%
Lösungsmittel, Erdölschnitt mit einem
Siedepunkt über 150°C und einem
Brechungsindex von 1,4 bis 1,6 10–20%

6. Papier nach einem der Ansprüche 1 bis 5, dadurch gekennzeichnet, dass die transparentmachende Zusammensetzung enthält (in Gewichtsprozent):

modifiziertes Keton-Aldehyd-Kondensationsharz (Säureindex: ≙ 0,2 mg KOH/g)
(DIN 53402, OH-Index: 300–320 mg KOH/g) 12%
Hexamethoxymethylmelamin 23%
Ethylalkohol 4%
Butyl-oder Isopropylalkohol 17%
Dibutylphthalat 28%
Erdölschnitt von Isoparaffinprodukten 16%

7. Zusammensetzung zum Transparentmachen durch Imprägnieren eines Celluloseträgers, ausgewählt unter reinen Lumpen bis zu 100% Holz, einschliesslich Stoffe und chemischer Cellulose, mit einem Gewicht von 20–350 g/m², gekennzeichnet durch einen Gehalt an:
– einem Keton-Aldehydharz,
– einem Amino- oder modifizierten Alkydharz,
– einem nichtwässrigen organischen Lösungsmittel mit einem Gehalt von mindestens einem Erdölschnitt mit einem Siedepunkt über 150°C und einem Brechungsindex von 1,4 bis 1,6 und
– einem Weichmacher.

8. Zusammensetzung nach Anspruch 7, gekennzeichnet durch einen Gehalt (in Gewichtsprozent) an:

einem Keton-Aldehydharz 10–20%
einem Aminoplast- oder modifizierten
Alkydharz 15–30%
einem Lösungsmittelsystem
Erdölschnitt mit einem Siedpunkt
über 150°C und einem Brechungsindex
von 1,4 bis 1,6 10–20%

gegebenenfalls Ethyl-, Butyl-,
Isobutyl- oder Isopropylalkohole 7–15%
Weichmacher 25–35%

9. Zusammensetzung nach Anspruch 7 oder 8, gekennzeichnet durch einen Gehalt (in Gewichtsprozent) an:

Kondensationsharz (modifiziertes
Keton-Aldehydharz) 10–20%
an der Vernetzung beteiligtem
Harz (Hexamethoxymethylmelamin
oder modifiziertes Alkydharz) 15–30%
Isopropyl- und/oder Butyl-
und/oder Isobutylalkohol 7–15%
Weichmacher 25–35%
Lösungsmittel, Erdölschnitt mit einem
Siedepunkt über 150°C und einem
Brechungsindex von 1,4 bis 1,6 10–20%

10. Zusammensetzung nach einem der Ansprüche 7 bis 9, gekennzeichnet durch einen Gehalt (in Gewichtsprozent) an:
modifiziertem Keton-Aldehyd-Kondensationsharz (Säureindex: ≙ 0,2 mg KOH/g
(DIN 53402), OH-Index: 300–320 mg KOH/g) 12%
Hexamethoxymethylmelaminharz 23%
Ethylalkohol 4%
Butyl- oder Isopropylalkohol 17%
Dibutylphthalat 28%
Erdölschnitt von Isoparaffinprodukten 16%

11. Verfahren zum Transparentmachen durch Imprägnieren eines Celluloseträgers, ausgewählt unter reinen Lumpen bis zu 100% Holz, einschliessliche Stoffe und chemischer Cellulose, mit einem Gewicht von 20–350 g/m², mit einer chemischen Imprägnierzusammensetzung, dadurch gekennzeichnet, dass der Träger mit dieser Zusammensetzung in ausreichender Menge imprägniert wird, so dass die Zwischenräume zwischen den Trägerfasern gefüllt werden, wobei diese Zusammensetzung enthält:

– ein Keton-Aldehydharz,
– ein Aminoplast- oder modifiziertes Alkydharz,
– ein nichtwässriges organisches Lösungsmittel mit einem Gehalt von mindestens einem Erdölschnitt mit einem Siedepunkt über 150°C und einem Brechungsindex von 1,4 bis 1,6 und
– einen Weichmacher,
der imprägnierte Träger ohne Druck direkt auf der Maschine getrocknet wird, wobei ein fertiges, transparent gemachtes, einem Pauspapier entsprechendes Blatt für graphische Zwecke erhalten wird.

12. Verfahren nach Anspruch 11, dadurch gekennzeichnet, dass die Imprägnierung nur auf einer Seite des Celluloseträgers durchgeführt wird.

13. Verfahren nach Anspruch 12, dadurch gekennzeichnet, dass zur Imprägnierung eine Auftragswalze verwendet wird.

14. Verfahren nach Anspruch 11, dadurch gekennzeichnet, dass die Imprägnierung gleichzeitig auf beiden Seiten des Celluloseträgers durchgeführt wird.

15. Verfahren nach Anspruch 14, dadurch gekennzeichnet, dass die Imprägnierung durch gleichzeitiges Aufbringen auf beide Seiten oder durch Durchleiten durch ein Vollbad durchgeführt wird.

16. Verfahren nach einem der Ansprüche 11 bis 15, dadurch gekennzeichnet, dass die Trocknung in zwei Stufen in einem Warmlufttrockner durchgeführt wird, wobei die erste Heizzone eine Temperatur von 110–120 °C und die zweite Heizzone von 135–150 °C aufweist.

17. Verfahren nach einem der Ansprüche 1 bis 15, dadurch gekennzeichnet, dass die Trocknung in einer einzigen Stufe durchgeführt wird.

18. Verwendung der Zusammensetzungen nach einem der Ansprüche 7 bis 10, dadurch gekennzeichnet, dass die chemische Imprägnierzusammensetzung als Tinte in einer Tiefdruckmaschine verwendet wird, wodurch eine lokale Transparentmachung und auf chemischem Weg Wasserzeichen erhalten werden.

Fig.1

Fig.2